Europäisches Patentamt

European Patent Office

Office européen des brevets

(19)

(11) Veröffentlichungsnummer : **0 274 502 B1**

(12) **EUROPÄISCHE PATENTSCHRIFT**

(45) Veröffentlichungstag der Patentschrift :
**05.02.92 Patentblatt 92/06**

(21) Anmeldenummer : **87904496.4**

(22) Anmeldetag : **11.07.87**

(86) Internationale Anmeldenummer :
**PCT/DE87/00312**

(87) Internationale Veröffentlichungsnummer :
**WO 88/00579 28.01.88 Gazette 88/03**

(51) Int. Cl.⁵ : **C05F 9/04**

(54) **MITTEL ZUR VERBESSERUNG UND NATÜRLICHEN GESUNDERHALTUNG VON BÖDEN UND PFLANZENWACHSTUM SOWIE ENTSPRECHENDES VERFAHREN HIERZU.**

(30) Priorität : **16.07.86 DE 3624012**

(43) Veröffentlichungstag der Anmeldung :
**20.07.88 Patentblatt 88/29**

(45) Bekanntmachung des Hinweises auf die
Patenterteilung :
**05.02.92 Patentblatt 92/06**

(84) Benannte Vertragsstaaten :
**AT BE CH DE FR GB IT LI LU NL SE**

(56) Entgegenhaltungen :
**EP-A- 0 054 122**
**EP-A- 0 111 742**
**GB-A- 2 126 071**

(73) Patentinhaber : **Kanne, Wilhelm, sen.**
**Im Geistwinkel 40**
**W-4670 Lünen (DE)**

(72) Erfinder : **Kanne, Wilhelm, sen.**
**Im Geistwinkel 40**
**W-4670 Lünen (DE)**

(74) Vertreter : **Fitzner, Ulrich, Dr.**
**Am Eichförstchen 2a**
**W-4030 Ratingen 4 (DE)**

EP 0 274 502 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Verbesserung und natürlichen Gesunderhaltung von Böden und Pflanzenwachstum auf Basis eines Milchsäurebakterien enthaltenden Gutes aus der Versäuerung von Brot in Wasser, wobei das Verfahren insbesondere zur Behandlung land- oder forstwirtschaftlich genutzten Böden bzw. zur Pflege und Gesunderhaltung von Pflanzen dient.

Aufgrund der heute gegebenen intensiven Nutzung und hohen Umweltbelastung von Böden wird es mehr und mehr notwendig, neuartige und über die übliche Düngung hinausgehende Mittel zur Bodenregeneration einzusetzen. Mit der Beschaffenheit des Bodens unlösbar verbunden ist das darauf stattfindende Pflanzenwachstum. Auch hier sind heute die Grenzen ersichtlich, die mit konventionellen Mitteln zum Pflanzenschutz gegen Schädlinge, Pflanzenkrankheiten und/oder unerwünschtes Misch-Pflanzenwachstum erzielt werden können. Die Rückkehr zu biologisch-dynamischen Behandlungsmethoden zur Pflege und Gesunderhaltung von Boden- und Pflanzenwachstum wird heute in weiten Kreisen gefordert.

Aus der EP-A 0054122 ist es bekannt, Sauerteigbrot einer natürlichen Vergärung in Wasser zu unterwerfen. Die daraus zu gewinnende Flüssigkeit wird zur Herstellung diätetischer Getränke verwendet.

Aus der EP-A 0 111 742 des Anmelders ist es bekannt, lebensfähige Mikroorganismen enthaltendes Mehl zu erzeugen. Ein derartiges Mehl, welches insbesondere zum Verzehr durch Menschen bestimmt ist, kann auch zur Kultivierung oder Kompostierung von Böden eingesetzt werden. Die dort vorgeschlagene Herstellungsweise des Mehles ist vergleichsweise aufwendig. Dabei wird über eine spontane Säuerung von Sauerteigbroten, die im Natursauerverfahren hergestellt werden, in Wasser nach Abziehen des Wassers das verbleibende Produkt sehr sanft getrocknet, d.h. die Trocknung geschieht so, daß die im Gärschlamm verbleibenden Mikroorganismen, insbesondere die Milchsäurebakterien, nicht zerstört bzw. abgetötet werden. Eine derartige Trocknung ist aber sehr aufwendig und verbraucht eine vergleichsweise sehr große Menge Energie, so daß diese unwirtschaftlich wird, wenn größere Mengen produziert werden müssen, um auch größere Flächen regenerieren zu können.

Aufgabe der Erfindung ist daher die Schaffung einer technischen Lehre, mit der bei der Erzielung guter Ergebnisse eine große Menge an Energie eingespart wird.

Gemäß der Erfindung wird diese Aufgabe durch ein Verfahren der eingangs bezeichneten Art erreicht, das dadurch gekennzeichnet ist, daß man den Böden und/oder Pflanzen den lebende Milchsäurebakterien enthaltenden und ohne Zwischentrocknung gewonnenen nassen Gärschlamm aus der spontanen Vergärung von Sauerteigbrot in Wasser zuführt.

Versuche haben gezeigt, daß der Einsatz und das Aufbringen von Milchsäurebakterien enthaltendem Gärschlamm in insbesondere feiner Verteilung auf die Böden eine Vielzahl von Vorteilen mit sich bringt. Das Gemisch aus lebenden Milchsäurebakterien und weitere Wirkstoffe enthaltendem Wasser dringt schneller in die Böden ein als beispielsweise ein entsprechendes Mehl, so daß hier auch mit geringeren Mengen gearbeitet werden kann.

Dabei dringen die Wirkstoffe und Milchsäurebakterien durch das feuchte bzw. nasse Medium Wasser auch schnell in die Schichten der zu behandelnden Böden ein, die etwas tiefer liegen, so daß sie z. B. Pflanzen sofort zur Verfügung stehen, während dieses bei einer Behandlung mit Mehl erst nach Regenfällen oder einer künstlichen Beregnung möglich wäre. Bei der Aufbringung von Mehl besteht im übrigen die Gefahr, daß größere Mengen entweder nicht den Böden zugeführt werden, sondern durch Oberflächenwasser abgetragen werden, oder aber an Stellen verweht werden, wo sie die ihnen zugedachte Funktion gar nicht ausüben können.

Dem Gesamtkonzept liegt die Erkenntnis zugrunde, daß durch den Getreidesäuren enthaltenden nassen Aufschluß sehr positiv auf die gesamten ökologischen Systeme Einfluß genommen werden kann. Die so behandelten Pflanzen sowie auch die derartige Flüssigkeiten aufnehmende natürliche Bodenfauna werden resistenter gegen Krankheiten. Die Regenerationsfähigkeit der Böden und Pflanzen wird um ein Vielfaches erhöht. Die Schadstoffbelastung verringert sich, wobei Versuche gezeigt haben, daß sogar die Einbindung von Schwermetallen in einer Weise möglich wird, daß diese nicht mehr als Schadstoffe in den Umweltkreislauf und damit nicht in die Nahrungskette gelangen.

Gärschlamm aus der Gärung von Sauerteigbroten in Wasser ist ein sehr hochwertiges Produkt mit einer hohen Konzentration an Milchsäurebakterien, der in einer Ausgestaltung der Erfindung als solcher auf Boden und/oder Pflanze aufgebracht werden kann und unverdünnt schon in sehr feiner Verteilung bzw. sehr geringer Anwendungskonzentration wirksam ist. Die Erfindung sieht aber darüberhinaus auch vor, den Gärschlamm verdünnt mit einer insbesonderen wäßrigen Phase einzusetzen. Als solche wäßrige Phase kann wenigstens anteilsweise die Flüssigphase aus der Vergärung des Sauerteigbrots zum Einsatz kommen. In dieser Ausführungsform wird somit das ganze Gut aus der Brotvergärungsstufe unverdünnt oder weiterhin verdünnt mit insbesondere wäßrigen Phasen verwendet.

Die für das erfindungsgemäße Verfahren eingesetzten Mittel enthalten den Gärschlamm - d.h. die aus der Sauerteigbrot-Vergärungsstufe abtrennbare wasserhaltige Feststoffphase - üblicherweise in Verdünnung mit wäßrigen Flüssigkeiten, wobei der Gärschlammgehalt der erfindungsgemäß eingesetzten Mittel in vergleichsweise weiten Grenzen schwanken kann. Geeignet sind beispielsweise Gärschlammgehalte im Bereich von etwa 0,1 bis 50 Gew.-%, wobei hier Mengen bis zu etwa 10 Gew.-% gute Anwendungsergebnisse liefern. Im allgemeinen wird der Gärschlammgehalt der erfindungsgemäßen Mittel wenigstens etwa 1 Gew.-% betragen. Im angegebenen Rahmen ist nicht nur die einfache Verteilung der erfindungsgemäßen Mittel auf Boden und-/oder Pflanze, beispielsweise durch Versprühen, Berieseln oder Verregnen gewährleistet, die beschriebenen günstigen Mischungsverhältnisse machen auch die einfache Dosierung in Anpassung an die jeweiligen Gegebenenheiten von Boden und/oder Pflanze möglich.

In einer wichtigen Ausführungsform beschreibt die Erfindung Verfahren zur Pflege und Gesunderhaltung von Böden und Pflanzenwachstum, wobei Gärschlämme der beschriebenen Art zum Einsatz kommen, die in der spontanen Versäuerungsstufe des ursprünglich eingesetzten Sauerteigbrotes vergleichsweise lange gehalten worden sind. Geeignet sind insbesondere Gärschlämme aus einer Versäuerungsstufe mit einer Dauer von wenigstens etwa 20 Tagen und insbesondere einer Dauer von wenigstens etwa 25 Tagen. Gärschlämme aus einer etwa 25 bis 40 Tage dauernden Versäuerungsstufe können besonders vorteilhaft sein. Durch diese vergleichsweise sehr lange Versäuerungsstufe des eingesetzten Sauerteigbrotes wird ein besonders intensiver Aufschluß des Wertstoffgehalts des eingesetzten Sauerteigbrotes und damit die unmittelbare Verwertbarkeit dieser Wertstoffe in den Stoffwechselzyklen der behandelten Flora und/oder Fauna sichergestellt.

Zweckmäßig kann es sein, wenn neben dem die Milchsäurebakterien enthaltenden Gemisch diesem weitere Zuschlagsstoffe bzw. Wirkstoffe für die Verbesserung und Pflege von Böden und Pflanzenwachstum zugefügt sind und das Gesamtgemisch dann den Böden und/oder Pflanzen zugeführt wird.

Derartige Zuschlagsstoffe können von sehr unterschiedlicher Art sein. So sieht die Erfindung vor, daß ein Feststoffanteil zusätzlich Mineralstoffe, Spurenelemente, Vitamine und dgl. enthält. Die Art der Zusammensetzung richtet sich im Regelfalle nach dem gewünschten Einsatzzweck.

In einer besonderen Ausgestaltung sieht die Erfindung vor, daß dem Feststoffanteil feinstgranuliertes Altglas zugefügt wird.

Interne Versuche haben nämlich gezeigt, daß sich hier eine Möglichkeit ergibt, stark belastete Böden wieder zu regenerieren. Das granulierte Altglas übernimmt dabei die Funktion von zuzusetzenden Sanden und bietet damit eine spezielle Art des Recyclings bzw. der Altglasverwertung. An dieser Stelle sei vermerkt, daß neben dem Altglas auch aufbereitete belastete Böden in feiner Verteilung direkt mit zusätzlich ausgetragen werden können, oder aber Schlacken aus Industrieprozessen und dgl. mehr.

Die Erfindung sieht auch vor, daß die Feststoffanteile mit den Milchsäurebakterien als Additiv auszubringender Gülle auf die zu behandelnden Böden eingesetzt werden.

Auch hier haben Versuche gezeigt, daß eine so aufbereitete Gülle ein sehr viel zweckmäßigeres Düngemittel darstellt als eine unbehandelte Gülle.

Insgesamt zeigt sich die Behandlung der belasteten Umwelt mit "Getreidesäuren" als ausgesprochen hilfreich zur Regeneration und Stärkung von Pflanzen und Tieren, insbesondere auch des Bodens. Grundsätzlich können die "Getreidesäuren" aus einer Vielzahl von Getreidearten stammen, so daß gemäß der Erfindung die Sauerteigbrote zur Bereitstellung der auszubringenden Milchsäurebakterien unter Einsatz von Roggen, und-/oder Hafer, und/oder Gerste, und/oder Weizen, und/oder Hirse, und/oder Mais, und/oder Reis gebacken und dann mit Wasser versetzt einer spontanen Säuerung unterworfen werden, nach Beendigung der Gärung gewünschtenfalls die wäßrige Phase abgezogen und/oder zugegeben und der feuchte Gärschlamm gegebenenfalls in feiner Verdünnung mit bzw. ohne zusätzliche Feststoffanteile den zu behandelnden Böden und/oder Pflanzen zugeführt wird.

Die Erfindung is nicht auf die hier beschriebenen Beispiele beschränkt. So kann eine Emulsion aus einem Feststoffanteil von 10 - 15 % mit den darin enthaltenen Milchsäurebakterien, Mineralstoffen, Spurenelementen und Vitaminen in der Landwirtschaft, im Gartenbau, im Obstbau, um Weinbau, bei Sportplätzen, un städtischen Grünanlagen, in Wäldern und Feldern eingesetzt werden, aber auch in der Industrie, wie etwa zur Reinigung von Böden bei Sportanlagen, in den Umfeldern von Kraftwerken, auf Zechenhalden, Straßenrändern, Böschungen und dgl.

Ein besonderer Vorteil besteht darin, daß Abwässer, die Anteile an so ausgebrachter Milchsäure aufweisen, sich sehr viel einfacher aufbereiten lassen. Die Milchsäurebakterien unterstützen offenbar die Aufbereitung dieser Abwässer.

Die Verarbeitung der erfindungsgemäß eingesetzten Mittel ist problemlos. Suspensionen bzw. Emulsionen der erfindungsgemäßen Art können von Hand, von Fahrzeugen oder auch aus der Luft ausgespritzt werden. Der Austrag kann dabei in an sich bekannter Weise auf bestimmte Bereiche beschränkt oder flächendeckend vorgenommen werden.

Die Herstellung der für das erfindungsgemäße Verfahren verwendeten Mittel und ihre Verwendung gestal-

3

tet sich beispielsweise in der im nachfolgenden näher geschilderten Art:

Abgelagertes Vollkorn-Sauerteigbrot der zuvor geschilderten Art wird mit Wasser zur Vergärung angesetzt. Der Gehalt an Brotsunstanz im Ansatz beträgt beispielsweise etwa 5 bis 50 Gew.-% Brotsubstanz, insbesondere etwa 10 bis 40 Gew.-% Brotsubstanz. Die eingesetzte Brotmenge ist an sich unabhängig davon, welchem Endverwendungszweck der Naßgärschlamm später zugeführt werden soll.

Die wäßrige Brotaufschlämmung wird einer natürlichen, insbesondere spontanen Vergärung unter Bedingungen unterworfen, die insbesondere die Bildung der sogenannten Brotsäuren, d. h. also bevorzugt Milchsäure und begrenzte Mengen Essigsäure, begünstigen. Zur gezielten Lenkung der gewünschten Versäurerung kann heterofermentatives Impfgut aus einer vorhergegangenen Spontansäuerung entsprechender Ansätze eingesetzt werden. Das zu versäuernde Brot-/Wassergemisch wird im geeigneten Temperaturbereich - Beispielsweise bis etwa 40°C - für den Zeitraum von etwa 20 bis 40 Tagen, vorzugsweise von wenigstens etwa 25 Tagen, dem versäuernden Aufschluß unter Bildung der gewünschten Bakterienpopulation überlassen. Es fällt ein vermehrungsfähige lebende Milchsäurebakterien enthaltendes Gut an, das gewünschtenfalls von Anteilen seiner Flüssigphase befreit werden kann. Ohne Trocknung der die Festanteile enthaltenden Gärschlammfraktion wird das so erhaltene Wertprodukt gewünschtenfalls nach Abmischung mit weiteren, bevorzugt natürlichen Wertstoffen für die Pflege und Gesunderhaltung von Boden und Pflanzenwachstum dem Einsatz zugeführt. Der Naßgärschlamm kann aber zur erleichterten Austragung auch nur mit Wasser in den angegebenen Mengenverhältnissen von insbesondere etwa 1 bis 50 Gew.-% Naßgärschlamm/Wasser verdünnt werden.

Die Boden- bzw. Pflanzendüngung kann beispielsweise wie folgt vorgenommen werden: In einer ersten Stufe erfolgt eine Grunddüngung, bei der beispielweise - jeweils auf einen Hektar Grundfläche bezogen - 300 Liter Naßgärschlamm mit 600 Liter Wasser verdünnt und auf den Boden aufgebracht werden. Die Nachdüngungen erfolgen dann in einem Verhältnis von 50 bis 100 Liter Naßgärschlamm in jeweils 300 Liter Wasser. Bodenflächen, die insbesondere für den Getreideanbau gedacht sind, sollten beispielsweise 10 mal pro Jahr mit der angegebenen Gießflüssigkeit behandelt werden.

Beim Obstanbau hat es sich als zweckmäßig erwiesen, mit Gießflüssigkeiten der genannten Art zunächst mindestens alle zwei Wochen zu spritzen, wobei diese Angabe insbesondere für die Umstellungsphase von chemischen Spritzmitteln auf die natürlichen Spritzmittel im Sinne der Erfindung gilt. Nach hinreichender Kräftigung des Pflanzenwachstums kann die Zeitspanne zwischen den einzelnen Behandlungsstufen verlängert werden.

Das erfindungsgemäße Verfahren kommt insbesondere im Rahmen der heute bekannten biologisch-dynamischen Maßnahmen in Land-, Forst- und Gartenwirtschaft zür Anwendung.

## Patentansprüche

1. Verfahren zur Verbesserung und Gesunderhaltung der natürlichen Qualität von Böden und Pflanzenwachstum, **dadurch gekennzeichnet**, daß man den Böden und/oder Pflanzen den lebende Milchsäurebakterien enthaltenden und ohne Zwischentrocknung gewonnenen nassen Gärschlamm aus der spontanen Vergärung von Sauerteigbrot in Wasser zuführt.

2. Verfahren nach Anspruch 1, **dadurch gekennzeichnet**, daß man wäßrigen Gärschlamm einsetzt, der einer wenigstens etwa 25 Tage dauernden spontanen Vergärung des Sauerteigbrots in Wasser entstammt.

3. Verfahren nach einem der Ansprüche 1 und 2, **dadurch gekennzeichnet**, daß der Gärschlamm mit Wasser oder wäßrigen Flüssigphasen verdünnt auf Böden und/oder Pflanzen aufgetragen, insbesondere versprüht wird, wobei der Gärschlammgehalt in diesen Behandlungsflüssigkeiten im Bereich von 0,1 bis 50 Gew. -% liegen und insbesondere etwa 1 bis 10 Gew.-% ausmachen kann.

4. Verfahren nach einem der Ansprüche 1 bis 3, **dadurch gekennzeichnet**, daß der Gärschlamm zusammen mit weiteren bevorzugt natürlichen Wertstoffen zur Pflege und Gesunderhaltung von Böden und Pflanzen ausgebracht wird, die beispielsweise Mineralstoffe, Spurenelemente und/oder Vitamine, aber auch natürliche Düngemittel, wie Gülle, sein können.

5. Verfahren nach einem der Ansprüche 1 bis 4, **dadurch gekennzeichnet**, daß der nasse Gärschlamm zusammmen mit feinstgranuliertem Altglas ausgebracht wird.

## Claims

1. Process for the improvement and preservation of the natural quality of soils and of the growth of plants characterized in that the soils and/or plants are supplied with a wet fermentation sludge from the spontaneous

EP 0 274 502 B1

fermentation of sauerteig bread in water, said sludge containing active lactic acid bacteria and being obtained without an intermediate drying step.

2. Process according to claim 1 characterized in that an aqueous fermentation sludge is employed which results from a spontaneous fermentation of sauerteig bread in water performed over a period of at least 25 days.

3. Process according to any of the claims 1 and 2 characterized in that said fermentation sludge, in a form diluted with water or with aqueous liquid phases, is applied, in particular sprayed, onto the soils and/or plants, whereby the content of said fermentation sludge in said liquids for the treatment may be within a range of from 0.1 to 50 % by weight, in particular from about 1 to 10 % by weight.

4. Process according to any of the claims 1 to 3, characterized in that said fermentation sludge is applied together with further, preferably natural, valuable substances for the cultivation and preservation of soils and plants which may, for example, be mineral substances, micronutrients and/or vitamins, but also natural fertilizers as for example liquid manure.

5. Process according to any of the claims 1 to 4 characterized in that the wet fermentation sludge is applied together with microgranulated recycled glass.


## Revendications

1. Procédé pour améliorer et maintenir à l'état salubre la qualité naturelle des sols et de la végétation, caractérisé par le fait qu'on apporte aux sols et/ou aux plantes de la boue de fermentation provenant de la fermentation spontanée du pain au levain dans l'eau, obtenue à l'état humide sans séchage intermédiaire et contenant des bactéries lactiques vivantes.

2. Procédé selon la revendication 1, caractérisé par le fait qu'on utilise de la boue de fermentation aqueuse, qui provient d'une fermentation spontanée du pain au levain dans l'eau, pendant au moins environ 25 jours.

3. Procédé selon l'une des revendications 1 et 2, caractérisé par le fait que la boue de fermentation est appliquée, en particulier pulvérisée, sur les sols et/ou les plantes, à l'état dilué avec de l'eau ou des phases liquides aqueuses, la teneur en boue de fermentation dans ces liquides de traitement pouvant se situer dans la plage de 0,1 à 50% en poids et représenter, en particulier, environ 1 à 10% en poids.

4. Procédé selon l'une quelconque des revendications 1 à 3, caractérisé par le fait que la boue de fermentation est appliquée conjointement avec d'autres matières de valeur, de préférence naturelles, pour la culture et le maintien à l'état salubre des sols et des plantes, matières de valeur qui peuvent être, par exemple, des matières minérales, des oligo-éléments et/ou des vitamines, mais également des engrais naturels, comme le lisier.

5. Procédé selon l'une quelconque des revendications 1 à 4, caractérisé par le fait que la boue de fermentation humide est appliquée conjointement avec du verre de récupération finement granulé.

5